# EUROPEAN PATENT SPECIFICATION

(11) **EP 2 939 817 B1**
(45) Date of publication and mention of the grant of the patent: **14.08.2019**
(21) Application number: 15165396.1
(22) Date of filing: 28.04.2015
(51) Int. Cl.: B29C 64/386, G06T 19/00, B33Y 30/00, B33Y 50/02

(54) **THREE-DIMENSIONAL PRINTING APPARATUS AND THREE-DIMENSIONAL PRINTING METHOD**
VORRICHTUNG ZUM DREIDIMENSIONALEN DRUCKEN UND VERFAHREN ZUM DREIDIMENSIONALEN DRUCKEN
APPAREIL ET PROCÉDÉ D'IMPRESSION TRIDIMENSIONNELLE

(30) Priority: 28.04.2014 JP 2014092887
(43) Date of publication of application: 04.11.2015
(73) Proprietor: Roland DG Corporation, Shizuoka 431-2103 (JP)
(72) Inventor: Kobayashi, Kouichi, Hamamatsu-shi, Shizuoka 431-2103 (JP); Suzuki, Akihiro, Hamamatsu-shi, Shizuoka 431-2103 (JP)
(74) Representative: Grünecker Patent- und Rechtsanwälte PartG mbB

(56) References cited:
- US-A1- 2004 207 662
- US-A1- 2009 072 447
- US-A1- 2012 105 903
- US-A1- 2013 066 812

## Description

### BACKGROUND OF THE INVENTION

### 1. Field of the Invention

The present invention relates to three-dimensional printing apparatuses and three-dimensional printing methods.

### 2. Description of the Related Art

As is known in the art, a three-dimensional object is formed by discharging photo-curable resin from a nozzle of a discharge head in accordance with three-dimensional data and curing the photo-curable resin. The nozzle is movable along three axes, i.e., X, Y, and Z axes of an X-Y-Z rectangular coordinate system. Such a technique is disclosed in JP 6-98689 B, for example.

Specifically, in the technique disclosed in JP 6-98689 B, photo-curable resin is discharged from a nozzle in accordance with cross-sectional image data generated from three-dimensional data, and light is applied to the discharged photo-curable resin, so that the photo-curable resin is cured to form resin layers. The resin layers, which are based on the cross-sectional image data, are stacked in sequence, thus forming a three-dimensional object.

As used herein, the term "cross-sectional image data" refers to image data representing cross sections obtained by dividing a three-dimensional object, which is represented by three-dimensional data, into a plurality of layers parallel or substantially parallel to an XY plane at a predetermined interval along the Z axis. In other words, each piece of cross-sectional image data represents a cross section obtained by horizontally dividing a three-dimensional object, which is to be formed, into a plurality of layers. A plurality of pieces of cross-sectional image data are generated from a single piece of three-dimensional data.

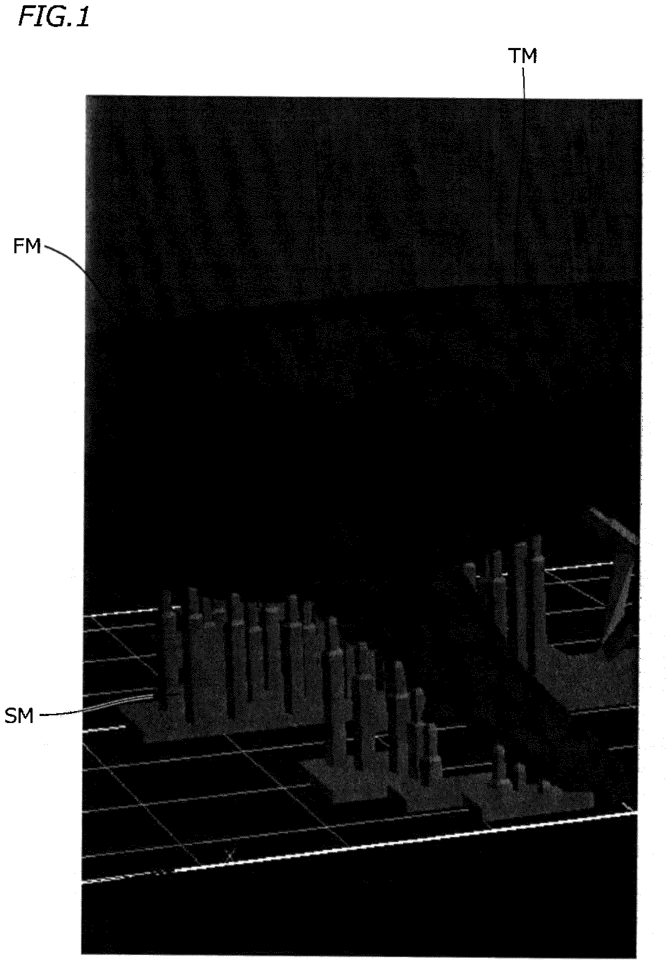

Hereinafter, how a conventional three-dimensional printing apparatus forms a three-dimensional object will be described with reference to FIG. 1. First, computations are performed to generate three-dimensional data of a full model FM. The full model FM includes a target model TM and a support model SM. The target model TM represents the shape of the three-dimensional object to be formed. The support model SM represents the shape of a support structure that supports the three-dimensional object while the three-dimensional object is formed with accuracy. The image of the full model FM is presented on a display, such as a monitor, in accordance with the three-dimensional data of the full model FM, which has been generated. A worker checks the full model FM presented on the display, and edits the target model TM and the support model SM as necessary.

Specifically, the worker adjusts the size and angle of the target model TM while checking the full model FM presented on the display. The worker also deletes or adds the support model SM while checking the full model FM presented on the display.

The full model FM, including the target and support models TM and SM that have been edited as necessary, is divided into a plurality of layers parallel or substantially parallel to the XY plane at a predetermined interval along the Z axis, so as to generate a plurality of pieces of cross sectional image data representing cross sections. Using the plurality of pieces of cross-sectional image data, resin layers are stacked one by one along the Z axis, thus forming the three-dimensional object.

Unfortunately, such a conventional three-dimensional printing apparatus stops forming a three-dimensional object in progress if the power is shut off while the three-dimensional object is being formed or if a cover is accidentally opened to expose the internal space of the apparatus in which the three-dimensional object is being formed. In such a case, the three-dimensional printing apparatus cannot finish forming the three-dimensional object with accuracy. Another problem is that when the three-dimensional printing apparatus makes quiet sounds during operation, the worker finds it difficult to determine whether the three-dimensional object is being formed.

This can cause the worker to turn off the three-dimensional printing apparatus or open the cover without noticing that the three-dimensional object is being formed. As a consequence, the three-dimensional printing apparatus cannot finish forming the three-dimensional object with accuracy.

US 2004/0207662 A1 discloses an apparatus for providing three-dimensional object fabrication status, comprising: an interface controller configured to receive and process data pertaining to three-dimensional object(s) fabrication and to control a graphical user interface to provide a visual representation of progress of the three-dimensional object(s) fabrication in the form of one or more progressively filed-in wireframe model representations of the three-dimensional object(s).

In view of the above problems, a three-dimensional printing apparatus and a three-dimensional printing method that enable a worker to make an exact visual check on the progress of formation of a three-dimensional object are desired.

This desire is fulfilled by the provision of a three-dimensional printing apparatus according to independent claim 1 and a three-dimensional printing method according to independent claim 8.

### SUMMARY OF THE INVENTION

Accordingly, preferred embodiments of the present invention provide a three-dimensional printing apparatus and a three-dimensional printing method that enable a worker to make an exact check on the progress of formation of a three-dimensional object even while the three-dimensional object is being formed.

A three-dimensional printing apparatus according to a preferred embodiment receives or generates three-dimensional data representing a shape of a three-dimensional object to be formed, and generates cross-sectional image data from the three-dimensional data so as to form the three-dimensional object in accordance with the generated cross-sectional image data. The cross-sectional image data represents cross sections obtained by dividing the three-dimensional object, which is to be formed, into a plurality of layers continuous in a predetermined direction. The apparatus includes a display, a layer image data generator, a layer image data output, and a display controller. The display is configured or programmed to present images. The layer image data generator is configured or programmed to add thickness information to the cross-sectional image data of each of the layers, thus generating layer image data three-dimensionally representing each of the layers. The layer image data output is configured or programmed to output the layer image data generated by the layer image data generator. The display controller is configured or programmed to cause the display to present a first image upon formation of a predetermined layer of the three-dimensional object in accordance with the cross-sectional image data of the predetermined layer. The first image is generated based on the layer image data of the predetermined layer output from the layer image data output.

According to another preferred embodiment, the layer image data generator preferably is configured or programmed to include an acquirer, a converter, a first generator, and a second generator. The acquirer is preferably configured or programmed to acquire first two-dimensional coordinate data from the cross-sectional image data of each of the layers. The converter is preferably configured or programmed to convert, using triangulation, the first two-dimensional coordinate data into second two-dimensional coordinate data which consist of triangles. The first generator is preferably configured or programmed to add height information to the second two-dimensional coordinate data, thus generating three-dimensional coordinate data. The second generator is preferably configured or programmed to add thickness information to the three-dimensional coordinate data, thus generating the layer image data three-dimensionally representing each of the layers.

According to still another preferred embodiment, the layer image data output is preferably configured or programmed to output all the layer image data, generated by the layer image data generator, to the display controller before the three-dimensional printing apparatus starts printing the three-dimensional object.

According to yet another preferred embodiment, the display controller is preferably configured or programmed to cause the display to present a second image before the three-dimensional printing apparatus starts printing the three-dimensional object. The second image preferably three-dimensionally represents the three-dimensional object in finished form in accordance with all the layer image data output from the layer image data output. The display controller is also preferably configured or programmed to cause the display to present, upon formation of the predetermined layer, the first image in a different mode from a present mode of the second image.

According to still yet another preferred embodiment, the display controller is preferably configured or programmed to cause the display to present a third image before the formation of the predetermined layer starts. The third image is preferably based on the layer image data of the predetermined layer output from the layer image data output. The third image is preferably presented in a different mode from a present mode of the first image.

According to another preferred embodiment, the three-dimensional printing apparatus preferably further includes a three-dimensional data output interface configured or programmed to output the three-dimensional data to the display controller. The display controller is preferably configured or programmed to cause the display to present a fourth image based on the three-dimensional data output from the three-dimensional data output interface. The display controller is also preferably configured or programmed to cause the display to present, upon formation of the predetermined layer, the first image in a different mode from a present mode of the fourth image.

According to still another preferred embodiment, the layer image data output is preferably configured or programmed to output the layer image data of the predetermined layer, generated by the layer image data generator, to the display controller upon formation of the predetermined layer.

A three-dimensional printing method according to a preferred embodiment is a three-dimensional printing method for forming a three-dimensional object. The method includes (a) preparing a display configured or programmed to present images; (b) preparing or generating three-dimensional data representing a shape of a three-dimensional object to be formed; (c) generating cross-sectional image data from the three-dimensional data, the cross-sectional image data representing cross sections obtained by dividing the three-dimensional object, which is to be formed, into a plurality of layers continuous in a predetermined direction; (d) adding thickness information to the cross-sectional image data of each of the layers, thus generating layer image data three-dimensionally representing each of the layers; (e) outputting the layer image data generated in the step (d); (f) causing the display to present a first image upon formation of a predetermined layer of the three-dimensional object in accordance with the cross-sectional image data of the predetermined layer, the first image being based on the layer image data of the predetermined layer output in the step (e); and (g) forming the three-dimensional object in accordance with the generated cross-sectional image data.

According to another preferred embodiment, the step (d) preferably includes: (d1) acquiring first two-dimensional coordinate data from the cross-sectional image data of each of the layers; (d2) converting, using triangulation, the first two-dimensional coordinate data into second two-dimensional coordinate data which consist of triangles; (d3) adding height information to the second two-dimensional coordinate data, thus generating three-dimensional coordinate data; and (d4) adding thickness information to the three-dimensional coordinate data, thus generating the layer image data three-dimensionally representing each of the layers.

According to still another preferred embodiment, the step (e) preferably includes (e1) outputting, before printing of the three-dimensional object starts, all the layer image data generated in the step (d).

According to yet another preferred embodiment, the step (f) preferably includes: (f1) causing the display to present a second image before the printing of the three-dimensional object starts, the second image three-dimensionally representing the three-dimensional object in finished form in accordance with all the layer image data output in the step (e); and (f2) causing the display to present, upon formation of the predetermined layer, the first image in a different mode from a present mode of the second image.

According to still yet another preferred embodiment, the step (f) preferably includes (f3) causing the display to present a third image before the formation of the predetermined layer starts. The third image is preferably based on the layer image data of the predetermined layer output in the step (e). The third image is preferably presented in a different mode from a present mode of the first image.

According to another preferred embodiment, the three-dimensional printing method preferably further includes (h) outputting the three-dimensional data representing the shape of the three-dimensional object to be formed. The step (f) preferably includes: (f4) causing the display to present a fourth image based on the three-dimensional data output in the step (h); and (f5) causing the display to present, upon formation of the predetermined layer, the first image in a different mode from a present mode of the fourth image.

According to still another preferred embodiment, the step (e) preferably includes (e2) outputting, upon formation of the predetermined layer, the layer image data of the predetermined layer generated in the step (d).

Various preferred embodiments of the present invention provide a three-dimensional printing apparatus and a three-dimensional printing method that enable a worker to make an exact check on the progress of formation of a three-dimensional object even while the three-dimensional object is being formed.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is an explanatory diagram illustrating a full model including a target model and a support model.
FIG. 2 is a perspective view of the structure of a three-dimensional printing apparatus according to a preferred embodiment of the present invention.
FIG. 3 is a block diagram illustrating the configuration of a microcomputer according to a preferred embodiment of the present invention.
FIG. 4A is an explanatory diagram illustrating how three-dimensional data of the full model is edited, with the target model designated as an editing target.
FIG. 4B is an explanatory diagram illustrating how the three-dimensional data of the full model is edited, with the support model designated as the editing target.
FIG. 5A is an explanatory diagram illustrating an image presented on a display before an instruction to form a three-dimensional object is provided.
FIG. 5B is an explanatory diagram illustrating an image presented on the display immediately after the three-dimensional object forming instruction has been provided.
FIG. 5C is an explanatory diagram illustrating an image presented on the display while the three-dimensional object is being formed.
FIG. 5D is an explanatory diagram illustrating an image presented on the display when the formation of the three-dimensional object has proceeded from the state of FIG. 5C.
FIGS. 6A and 6B are a flow chart of a procedure for generating layer image data.
FIG. 7 is a flow chart of a procedure for forming a three-dimensional object.

### DETAILED DESCRIPTION OF THE PREFERRED EMBODIMENTS

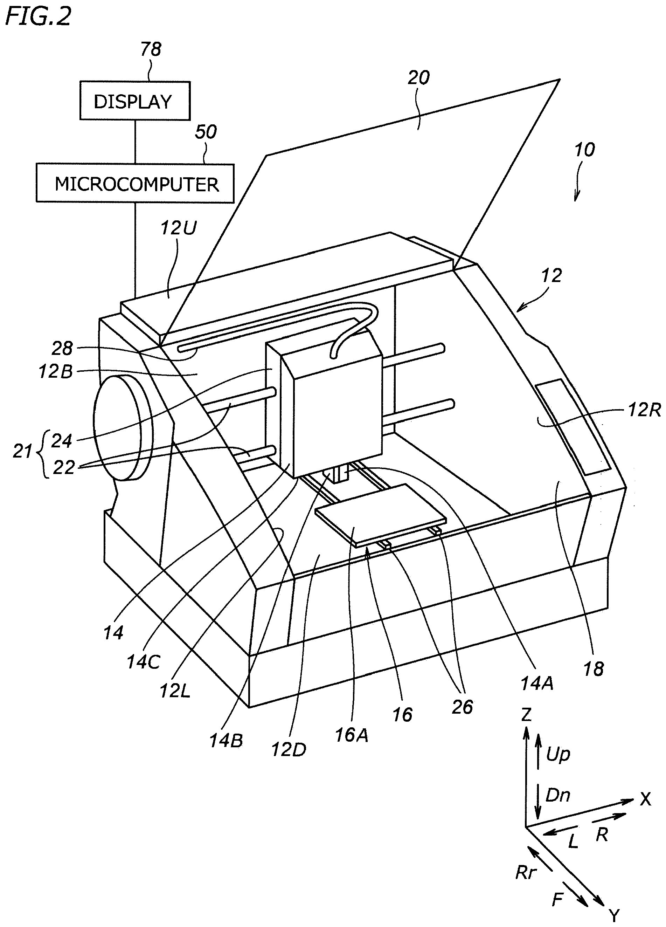

Hereinafter, preferred embodiments of the present invention will be described with reference to the drawings. FIG. 2 illustrates a three-dimensional printing apparatus 10 according to the present preferred embodiment. The three-dimensional printing apparatus 10 cures a resin material to sequentially stack resin layers having predetermined cross-sectional shapes, thus forming a three-dimensional obj ect. Examples of the resin material include thermoplastic resin, photo-curable resin, and ultraviolet-curable resin. The following description is based on the assumption that photo-curable resin is used as the resin material, but this is not intended to limit the type of resin material used in the preferred embodiments of the present invention.

The reference signs "F", "Rr", "R", "L", "Up", and "Dn" in FIG. 2 respectively denote front, rear, right, left, up, and down. The reference sign "X" in FIG. 2 denotes an X axis of an X-Y-Z rectangular coordinate system. The X axis extends in the right-left direction. The reference sign "Y" in FIG. 2 denotes a Y axis of the X-Y-Z rectangular coordinate system. The Y axis extends in the front-rear direction. The reference sign "Z" in FIG. 2 denotes a Z axis of the X-Y-Z rectangular coordinate system. The Z axis extends in the up-down direction. The definition of the directions is given merely for the sake of convenience, and is not intended to limit in any way how the three-dimensional printing apparatus 10 is installed.

As illustrated in FIG. 2, the three-dimensional printing apparatus 10 preferably includes a microcomputer 50. The microcomputer 50 is configured or programmed to control all operations of the three-dimensional printing apparatus 10. The microcomputer 50 generates cross-sectional image data, which is necessary to form a three-dimensional object, in accordance with three-dimensional data of a full model FM (i.e., data of a three-dimensional model). The full model FM includes a target model TM and a support model SM.

The microcomputer 50 generates data of images three-dimensionally representing layers of the three-dimensional object, which are to be actually formed, in accordance with the generated cross-sectional image data. An "image three-dimensionally representing a layer of a three-dimensional object, which is to be actually formed, in accordance with cross-sectional image data" will hereinafter be referred to as a "layer image" where appropriate. "Data of a layer image" will hereinafter be referred to as "layer image data" where appropriate.

As illustrated in FIG. 2, the three-dimensional printing apparatus 10 preferably further includes a display 78. The display 78 presents various images, such as images of a three-dimensional object which are based on three-dimensional data. The microcomputer 50 is connected to the display 78.

Layer images presented on the display 78 in accordance with corresponding layer image data are stacked in sequence, thus generating an image three-dimensionally representing a three-dimensional object to be actually formed. An "image three-dimensionally representing a three-dimensional object to be actually formed" will hereinafter be referred to as a "printing image" where appropriate.

A worker provides an instruction to form a three-dimensional object. Note that an instruction to form a three-dimensional object may herein be referred to as a "three-dimensional object forming instruction". In response to this instruction, the microcomputer 50 controls operations of components of the three-dimensional printing apparatus 10 in accordance with cross-sectional image data. Resin layers formed in accordance with cross-sectional image data are stacked, thus forming a desired three-dimensional object.

As illustrated in FIG. 2, the three-dimensional printing apparatus 10 preferably further includes an enclosure 12, a discharge head 14, a table 16, and a moving mechanism 21.

The enclosure 12 preferably includes a left wall 12L, a right wall 12R, a bottom wall 12D, a rear wall 12B, and an upper wall 12U. The enclosure 12 is provided with an opening 18 extending from the upper portion of the enclosure 12 to the front portion of the enclosure 12. The enclosure 12 is further provided with a cover 20 to cover the opening 18. The cover 20 is a transparent member. The cover 20 is openable and closable. By opening the cover 20, the internal space of the enclosure 12 is brought into communication with the external space of the enclosure 12, thus placing the three-dimensional printing apparatus 10 in an open state. By closing the cover 20, the internal space of the enclosure 12 is brought out of communication with the external space of the enclosure 12, thus placing the three-dimensional printing apparatus 10 in a closed state.

When the cover 20 is opened, for example, a three-dimensional object formed on an upper surface 16A of the table 16 is taken out of the three-dimensional printing apparatus 10. When the cover 20 is closed, a three-dimensional object is formed using the discharge head 14.

The enclosure 12 preferably further includes a tank (not illustrated) inside the rear wall 12B. The tank stores photo-curable resin. The tank is connected with a tube 28 that is in communication with the discharge head 14.

As illustrated in FIG. 2, the moving mechanism 21 is disposed in the enclosure 12. The moving mechanism 21 is controlled by the microcomputer 50. The moving mechanism 21 preferably includes a pair of guide rails 22, and a movable member 24. The guide rails 22 extend in the right-left direction. In other words, the guide rails 22 extend along the X axis of the X-Y-Z rectangular coordinate system. The guide rails 22 connect the right wall 12R and the left wall 12L to each other. The movable member 24 is movable along the guide rails 22. The movable member 24 moves in the right-left direction upon receiving a driving force from a motor (not illustrated). The motor is controlled by the microcomputer 50. The movable member 24 moves rightward and leftward along the X axis.

The discharge head 14 discharges photo-curable resin. The discharge head 14 preferably includes a nozzle 14A. The nozzle 14A is provided on a lower surface 14C of the discharge head 14. The discharge head 14 is supplied with photo-curable resin sent through the tube 28 from the tank (not illustrated) inside the rear wall 12B. The supplied photo-curable resin is discharged from the nozzle 14A.

The discharge head 14 cures the discharged photo-curable resin. The discharge head 14 preferably further includes a light applicator 14B. The light applicator 14B is provided on the lower surface 14C of the discharge head 14. The light applicator 14B applies light to the photo-curable resin discharged from the nozzle 14A. The photo-curable resin discharged from the nozzle 14A is cured with the light applied from the light applicator 14B.

The discharge head 14 is movably disposed inside the enclosure 12. The discharge head 14 is attached to the movable member 24. More specifically, the discharge head 14 is attached to the front surface of the movable member 24. The discharge head 14 is movable along the Z axis of the X-Y-Z rectangular coordinate system. The discharge head 14 is movable along a guide rail (not illustrated) provided on the front surface of the movable member 24 and extending along the Z axis. The discharge head 14 moves in the up-down direction upon receiving a driving force from a motor (not illustrated) provided for the discharge head 14. This motor is controlled by the microcomputer 50. The discharge head 14 moves up and down along the Z axis. The discharge head 14 is also movable along the X axis together with the movable member 24, because the discharge head 14 is attached to the movable member 24.

Under control of the microcomputer 50, the discharge head 14 operates as follows in accordance with cross-sectional image data. The discharge head 14 discharges photo-curable resin from the nozzle 14A, and applies light from the light applicator 14B to the photo-curable resin discharged from the nozzle 14A, while moving along the X and Z axes.

The table 16 holds the photo-curable resin discharged from the discharge head 14. More specifically, the photo-curable resin discharged from the discharge head 14 is held on the upper surface 16A of the table 16. The table 16 is movably disposed inside the enclosure 12. The table 16 is movable along a pair of guide rails 26. The guide rails 26 are provided on the bottom wall 12D of the enclosure 12. The guide rails 26 extend along the Y axis.

The table 16 is provided with a motor (not illustrated) . This motor is controlled by the microcomputer 50. Upon receiving a driving force from the motor, the table 16 moves forward and rearward along the pair of guide rails 26, i.e. , along the Y axis. Thus, the relative positions of the discharge head 14 and the table 16 with respect to each other change three-dimensionally.

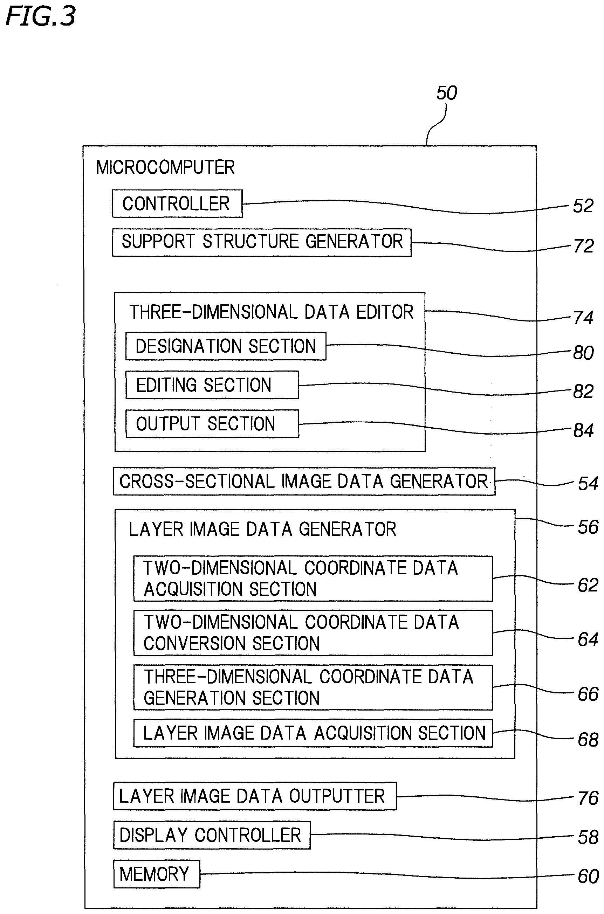

Next, the configuration of the microcomputer 50 will be described with reference to FIG. 3.

As illustrated in FIG. 3, the microcomputer 50 preferably includes a controller 52, a support structure generator 72, a three-dimensional data editor 74, a cross-sectional image data generator 54, a layer image data generator 56, a layer image data output 76, a display controller 58, and a memory 60.

The controller 52 controls operations of the components of the three-dimensional printing apparatus 10. The controller 52 drives, for example, the motors (not illustrated) in accordance with cross-sectional image data generated by the cross-sectional image data generator 54, so as to control, for example, the movement of the movable member 24 along the X axis, the movement of the discharge head 14 along the Z axis, the movement of the table 16 along the Y axis, and the discharge of photo-curable resin from the discharge head 14.

Upon formation of a predetermined layer in accordance with cross-sectional image data, the controller 52 outputs, to the layer image data output 76, information indicating that the predetermined layer has been formed. More specifically, upon formation of an ith layer in accordance with cross-sectional image data of the ith layer (where i is a positive integer), the controller 52 outputs, to the layer image data output 76, information indicating that the formation of the ith layer has been completed.

The support structure generator 72 generates the support model SM, thus generating three-dimensional data of the full model FM including the support model SM. More specifically, the support structure generator 72 performs a computation so as to generate the support model SM representing the shape of a support structure. The support structure supports a three-dimensional object while the three-dimensional object, whose shape is represented by the target model (printing model) TM, is formed with accuracy. Because the computation to generate three-dimensional data, representing the shape of the support model SM, may be performed using a conventionally known method, the detailed description thereof will be omitted.

The worker is able to distinguish between the three-dimensional data of the target model TM and the three-dimensional data of the support model SM, which are included in the three-dimensional data of the full model FM that been generated.

The support structure generator 72 outputs the three-dimensional data of the full model FM to the memory 60. The three-dimensional data of the full model FM is stored in the memory 60. The support structure generator 72 also outputs the three-dimensional data of the full model FM to the three-dimensional data editor 74.

The three-dimensional data editor 74 edits the three-dimensional data of the full model FM in accordance with data entered by the worker. The three-dimensional data editor 74 preferably includes a designation section 80, an editing section 82, and an output interface (or a three-dimensional data output interface) 84. The designation section 80 designates, as an editing target, one of the target and support models TM and SM in the three-dimensional data of the full model FM in accordance with data entered by the worker. The editing section 82 edits the editing target, designated by the designation section 80, in accordance with data entered by the worker. The output interface 84 outputs the three-dimensional data of the full model FM to the cross-sectional image data generator 54 upon receiving an instruction to generate cross-sectional image data. Note that an instruction to generate cross-sectional image data may hereinafter be referred to as a "cross-sectional image data generating instruction" . The output interface 84 also outputs, to the display controller 58, the three-dimensional data of the full model FM generated by the support structure generator 72. The display controller 58 causes the display 78 to present an image based on the three-dimensional data of the full model FM.

The designation section 80 outputs, to the display controller 58, information on one of the target and support models TM and SM that has been designated as the editing target by the designation section 80. The display controller 58 controls the display 78 so that the display 78 presents the image based on the three-dimensional data of the full model FM. In response to the information on one of the target and support models TM and SM that has been designated as the editing target by the designation section 80, the display controller 58 causes the display 78 to present the other one of the target and support models TM and SM, which has not been designated as the editing target, in a semi-transparent manner.

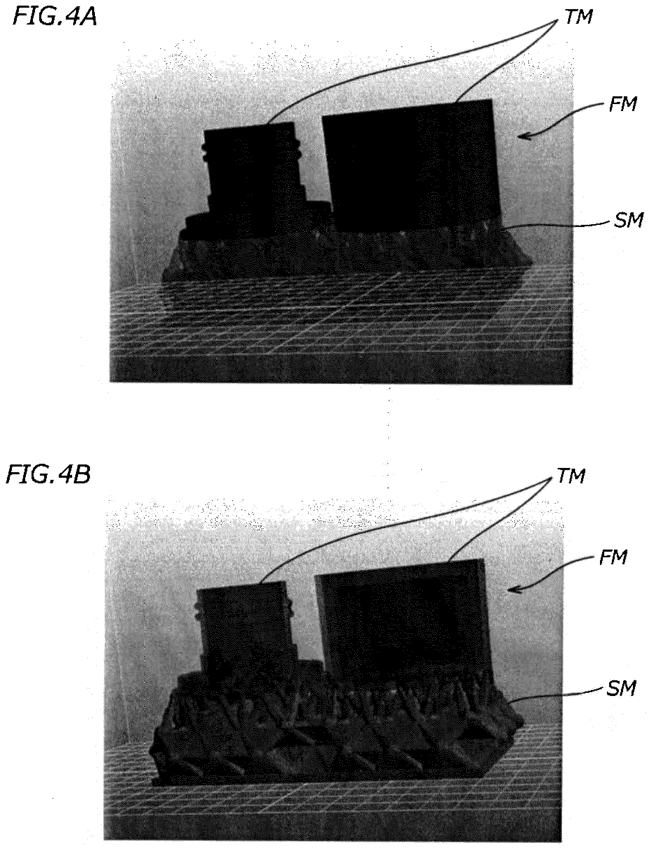

Upon designating the target model TM as the editing target, the designation section 80 outputs, to the display controller 58, information indicating that the target model TM has been designated as the editing target. FIG. 4A illustrates the image that is based on the three-dimensional data of the full model FM and is presented on the display 78, with the support model SM presented in a semi-transparent manner under control of the display controller 58.

Upon designating the support model SM as the editing target, the designation section 80 outputs, to the display controller 58, information indicating that the support model SM has been designated as the editing target. FIG. 4B illustrates the image that is based on the three-dimensional data of the full model FM and is presented on the display 78, with the target model TM presented in a semi-transparent manner under control of the display controller 58.

The worker operates an operating element (not illustrated) so as to edit one of the target and support models TM and SM that has been designated as the editing target. In response to this operation, the editing section 82 edits the three-dimensional data of the full model FM in accordance with the edits performed on the editing target designated by the designation section 80.

Specifically, the editing section 82 first determines whether the worker has edited the editing target. Upon determining that the worker has edited the editing target, the editing section 82 edits the three-dimensional data of the full model FM in accordance with the edits performed by the worker. The three-dimensional data of the full model FM, which has been edited, is output to and stored in the memory 60.

The worker operates an operating element (not illustrated) so as to provide a cross-sectional image data generating instruction. In response to this instruction, the output interface 84 outputs, to the cross-sectional image data generator 54, the three-dimensional data of the full model FM stored in the memory 60.

Specifically, the output interface 84 first determines whether the cross-sectional image data generating instruction has been provided. Upon determining that the cross-sectional image data generating instruction has been provided, the output interface 84 outputs, to the cross-sectional image data generator 54, the three-dimensional data of the full model FM stored in the memory 60. Note that upon determining that the cross-sectional image data generating instruction has been provided, the output interface 84 outputs, to the cross-sectional image data generator 54, the three-dimensional data of the full model FM stored in the memory 60, irrespective of whether edits have been performed on the three-dimensional data of the full model FM.

The cross-sectional image data generator 54 generates cross-sectional image data required to form a three-dimensional object. The cross-sectional image data generator 54 generates cross-sectional image data from the three-dimensional data of the full model FM output from the output interface 84.

The cross-sectional image data generator 54 generates cross-sectional image data from the three-dimensional data of the full model FM using a conventionally known method. More specifically, the cross-sectional image data generator 54 generates cross-sectional image data representing cross sections obtained by dividing a three-dimensional object and a support structure, represented by the three-dimensional data of the full model FM, into a plurality of layers parallel or substantially parallel to the XY plane at a predetermined interval along the Z axis. The generated cross-sectional image data is output to and stored in the memory 60. The predetermined interval, at which a three-dimensional object to be formed is divided into a plurality of layers parallel or substantially parallel to the XY plane along the Z axis, is a "layer pitch" that is a distance between the cross sections adjacent to each other and set by the worker where appropriate. The layer pitch preferably ranges from about 0.1 mm to about 0.15 mm, for example.

The cross-sectional image data generator 54 assigns layer symbols to the generated cross-sectional image data. The layer symbols are assigned to the cross-sectional image data in ascending order of their Z axis coordinate values, for example. Suppose that the generated cross-sectional image data has the following Z axis coordinate values: 0, Z₁, Z₂, Z₃, ..., and Zₙ₋₁ (where n is a positive integer). Then, the cross-sectional image data having the coordinate value "0" is defined as a first layer, the cross-sectional image data having the coordinate value "Z₁" is defined as a second layer, the cross-sectional image data having the coordinate value "Z₂" is defined as a third layer, the cross-sectional image data having the coordinate value "Z₃" is defined as a fourth layer, and the cross-sectional image data having the coordinate value "Zₙ₋₁" is defined as an nth layer (last layer) .

In accordance with the cross-sectional image data generated by the cross-sectional image data generator 54, the layer image data generator 56 generates layer image data of each layer to be actually formed. The layer image data generator 56 preferably includes a two-dimensional coordinate data acquirer (or an acquirer) 62; a two-dimensional coordinate data converter (or a converter) 64; a three-dimensional coordinate data generator (or a first generator) 66; and a layer image data acquirer (or a second generator) 68.

The two-dimensional coordinate data acquirer 62 acquires two-dimensional coordinate data A from the cross-sectional image data. More specifically, the two-dimensional coordinate data acquirer 62 acquires the two-dimensional coordinate data A of a predetermined layer from the cross-sectional image data of the predetermined layer.

Using triangulation, the two-dimensional coordinate data converter 64 converts the two-dimensional coordinate data A of the predetermined layer, which has been acquired by the two-dimensional coordinate data acquirer 62, into two-dimensional coordinate data B including triangles.

The three-dimensional coordinate data generator 66 adds height information to the two-dimensional coordinate data B of the predetermined layer obtained by the two-dimensional coordinate data converter 64, thus generating three-dimensional coordinate data. The three-dimensional coordinate data, generated by the three-dimensional coordinate data generator 66, is two-dimensional coordinate data at the height indicated by the height information. For example, supposing that layer image data is generated from the cross-sectional image data of the ith layer (where i is a positive integer), the term "height information" refers to a value obtained by multiplying "i" by the layer pitch.

The layer image data acquirer 68 adds thickness information (i.e., a distance along the Z-axis) to the three-dimensional coordinate data generated by the three-dimensional coordinate data generator 66, thus generating layer image data three-dimensionally representing each layer. As used herein, the term "thickness information" refers to a value corresponding to the layer pitch.

When generating layer image data, the layer image data acquirer 68 assigns, to the layer image data, layer symbols identical to those assigned to the corresponding cross-sectional image data. For example, when the layer image data of the ith layer is generated, the layer symbol for the ith layer is assigned to this layer image data. The layer image data acquirer 68 outputs the acquired layer image data to the memory 60. Thus, the acquired layer image data is stored in the memory 60.

The worker operates an operating element (not illustrated) so as to provide a three-dimensional object forming instruction. In response to this instruction, the layer image data output 76 sequentially outputs the layer image data of the formed layers to the display controller 58. The display controller 58 controls the display 78 so that the display 78 presents an image in which the formed layers are stacked.

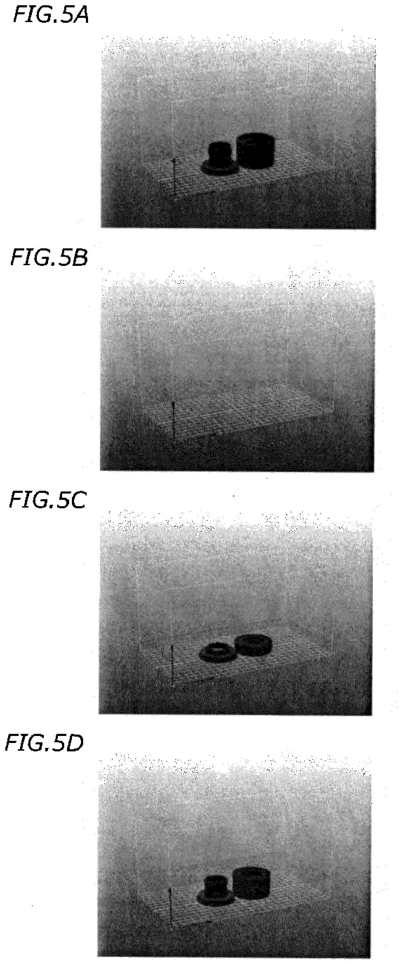

Specifically, before the three-dimensional object forming instruction is provided by the worker, the layer image data output 76 outputs, to the display controller 58, the layer image data stored in the memory 60. Thus, as illustrated in FIG. 5A, the display 78 presents an image in which the layers based on the layer image data, including the last layer, are sequentially stacked, i.e., a printing image three-dimensionally representing a three-dimensional object to be actually formed.

As illustrated in FIG. 5B, the display controller 58 temporarily blanks the printing image on the display 78 in response to the three-dimensional object forming instruction provided by the worker. As illustrated in FIG. 5C, upon actual formation of layers in accordance with cross-sectional image data, the layer image data of the formed layers is output to the display controller 58 on a one-by-one basis, so that the display 78 presents an image in which the formed layers are stacked.

During the course of this process, the controller 52 outputs, to the layer image data output 76, information indicating that a predetermined layer has been formed, and in response to this information, the layer image data output 76 outputs, to the display controller 58, the layer image data of the predetermined layer stored in the memory 60. For example, upon actual formation of the first layer in accordance with the cross-sectional image data of the first layer, the controller 52 outputs, to the layer image data output 76, information indicating that the first layer has been formed. In response to this information, the layer image data output 76 outputs, to the display controller 58, the layer image data of the first layer stored in the memory 60. Thus, the layer image of the first layer is presented on the display 78.

Subsequently, upon actual formation of the second layer in accordance with the cross-sectional image data of the second layer, the controller 52 outputs, to the layer image data output 76, information indicating that the second layer has been formed. In response to this information, the layer image data output 76 outputs, to the display controller 58, the layer image data of the second layer stored in the memory 60. Thus, in addition to the preceding layer image of the first layer, the layer image of the second layer is presented on the display 78. Because the layer image data includes height information, the layer images of the first and second layers are presented on the display 78, with the layer image of the second layer stacked on the layer image of the first layer.

As illustrated in FIGS. 5C and 5D, each time a layer is actually formed, the display 78 presents an image in which the layer image of the formed layer is stacked on the preceding layer image. Upon formation of the last layer, the display 78 presents an image in which all of the layers have been formed, i.e. , a printing image.

The display controller 58 controls the display 78 so that the display 78 presents an image based on three-dimensional data of the full model FM, an image based on cross-sectional image data, or an image based on layer image data, for example. The display controller 58 exercises control over what data is presented on the display 78. For example, the display controller 58 controls the display 78 so that an image, such as an image based on the three-dimensional data of the full model FM or an image based on the layer image data, is presented on the display 78, or the image presented on the display 78 is blanked. In accordance with information entered by the worker through an operating element (not illustrated), the display controller 58 changes images presented on the display 78.

The memory 60 stores various information including: three-dimensional data of the target model TM; three-dimensional data of the full model FM including the support model SM; cross-sectional image data generated by the cross-sectional image data generator 54; and layer image data generated by the layer image data generator 56.

To form a three-dimensional object using the three-dimensional printing apparatus 10 described above, the worker first enters three-dimensional data of the target model TM into the microcomputer 50. Then, the worker operates the operating element (not illustrated) so as to provide a cross-sectional image data generating instruction. In response to this instruction, the microcomputer 50 starts an image data generating process.

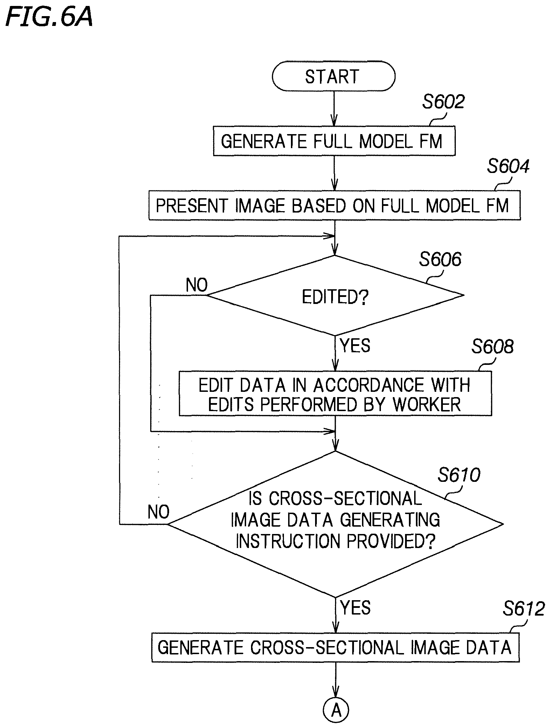

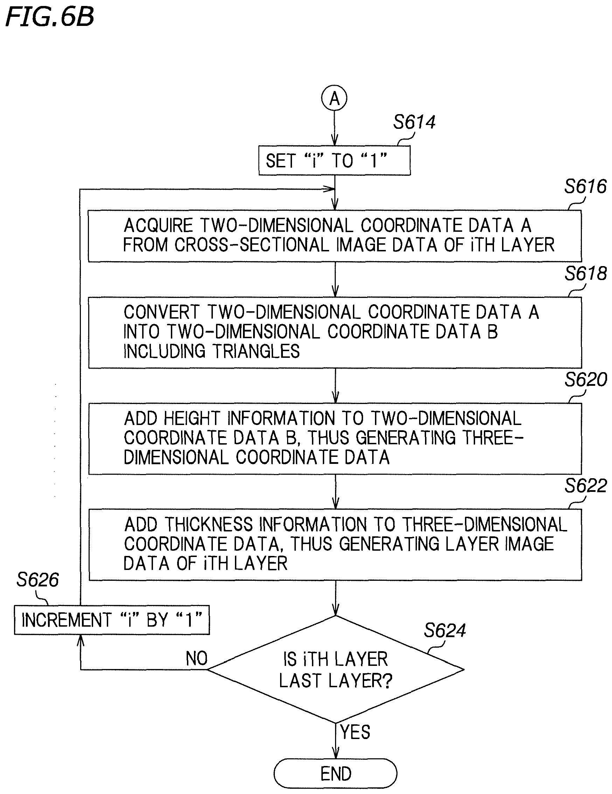

Hereinafter, how image data is generated will be described with reference to the flow chart of FIGS. 6A and 6B.

First, in Step S602, the support structure generator 72 generates three-dimensional data of the full model FM, including the support model SM, in accordance with three-dimensional data of the target model TM entered by the worker. The three-dimensional data of the full model FM, which has been generated, is output to and stored in the memory 60.

In Step S604, the display 78 presents an image based on the three-dimensional data of the full model FM generated in Step S602. More specifically, in Step S604, the output interface 84 outputs, to the display controller 58, the three-dimensional data of the full model FM generated by the support structure generator 72. Then, the display controller 58 causes the display 78 to present the image based on the three-dimensional data of the full model FM.

In Step S606, it is determined whether the worker has edited the image that is based on the three-dimensional data of the full model FM and is presented on the display 78. More specifically, in Step S606, the editing section 82 determines whether the worker has edited the three-dimensional data of the full model FM through the operating element (not illustrated). Upon determination that the three-dimensional data of the full model FM has been edited, the process proceeds to Step S608. In contrast, upon determination that the three-dimensional data of the full model FM has not been edited, the process proceeds to Step S610.

In Step S608, the editing section 82 edits the three-dimensional data of the full model FM in accordance with the edits performed by the worker. The three-dimensional data of the full model FM, which has been edited, is output to and stored in the memory 60.

In Step S610, it is determined whether the worker has provided the cross-sectional image data generating instruction. More specifically, in Step S610, the output interface 84 determines whether the worker has provided the cross-sectional image data generating instruction through the operating element (not illustrated). Upon determination that the cross-sectional image data generating instruction has not been provided, the process returns to Step S606. In contrast, upon determination that the cross-sectional image data generating instruction has been provided, the process proceeds to Step S612.

In Step S612, the cross-sectional image data generator 54 generates cross-sectional image data. More specifically, in Step S612, the output interface 84 outputs, to the cross-sectional image data generator 54, the three-dimensional data of the full model FM stored in the memory 60. Then, the cross-sectional image data generator 54 divides a three-dimensional object and a support structure, represented by the received three-dimensional data of the full model FM, into a plurality of layers parallel or substantially parallel to the XY plane at a predetermined interval (which is a "layer pitch" set by the worker) along the Z axis, thus generating cross-sectional image data representing a plurality of cross sections . The generated cross-sectional image data is output to and stored in the memory 60.

In this step, layer symbols are assigned to the cross-sectional image data in ascending order of their Z axis coordinate values. Suppose that the generated cross-sectional image data has the following Z axis coordinate values: 0, Z₁, Z₂, ..., Z_{i-1,} ..., and Zₙ₋₁ (where i < n, and i and n are positive integers) . Then, the cross-sectional image data having the coordinate value "0" is defined as a first layer, the cross-sectional image data having the coordinate value "Z₁" is defined as a second layer, the cross-sectional image data having the coordinate value "Z₂" is defined as a third layer, the cross-sectional image data having the coordinate value "Zᵢ₋₁" is defined as an ith layer, and the cross-sectional image data having the coordinate value "Zₙ₋₁" is defined as an nth layer (last layer).

In Step S614, "i" representing the layer symbol of the cross-sectional image data is initialized to "1". More specifically, in Step S614, the controller 52 sets "i", representing the layer symbol of the cross-sectional image data, to "1".

In Step S616, two-dimensional coordinate data A is acquired from the cross-sectional image data of the ith layer. More specifically, in Step S616, the two-dimensional coordinate data acquirer 62 acquires the two-dimensional coordinate data A of the ith layer from the cross-sectional image data of the ith layer.

In Step S618, using triangulation, the acquired two-dimensional coordinate data A is converted into two-dimensional coordinate data B including triangles. More specifically, in Step S618, the two-dimensional coordinate data converter 64 converts, using triangulation, the two-dimensional coordinate data A of the ith layer into the two-dimensional coordinate data B including triangles.

In Step S620, height information is added to the two-dimensional coordinate data B of the ith layer, thus generating three-dimensional coordinate data. More specifically, in Step S620, the three-dimensional coordinate data generator 66 adds height information, which is represented as "i × layer pitch", to the two-dimensional coordinate data B of the ith layer, thus generating the three-dimensional coordinate data of the ith layer.

In Step S622, thickness information is added to the three-dimensional coordinate data of the ith layer, thus generating layer image data three-dimensionally representing the ith layer. More specifically, in Step S622, the layer image data acquirer 68 adds thickness information (which is a layer pitch) to the three-dimensional coordinate data of the ith layer, thus generating the layer image data of the ith layer. The layer image data of the ith layer, which has been generated, is output to and stored in the memory 60.

In Step S624, the layer image data acquirer 68 determines whether the ith layer is the last layer. Upon determination in Step S624 that the ith layer is not the last layer, the process proceeds to Step S626. In contrast, upon determination in Step S624 that the ith layer is the last layer, the image data generating process ends.

In Step S626, the value of "i" is incremented by "1". More specifically, in Step S626, the value of "i" is set so that the two-dimensional coordinate data acquirer 62 acquires, in Step S616, two-dimensional coordinate data A from cross-sectional image data of a next layer (i.e., a layer subsequent to the layer whose layer image data has been generated in Step S622).

The image data generating process is performed as described above, thus generating the cross-sectional image data and layer image data of the first layer to the nth layer (last layer) .

Then, in response to a three-dimensional object forming instruction provided by the worker through the operating element (not illustrated), the three-dimensional printing apparatus 10 starts forming a three-dimensional object under control of the microcomputer 50. Note that once the three-dimensional printing apparatus 10 starts forming a three-dimensional object, the display controller 58 temporarily blanks the printing image presented on the display 78.

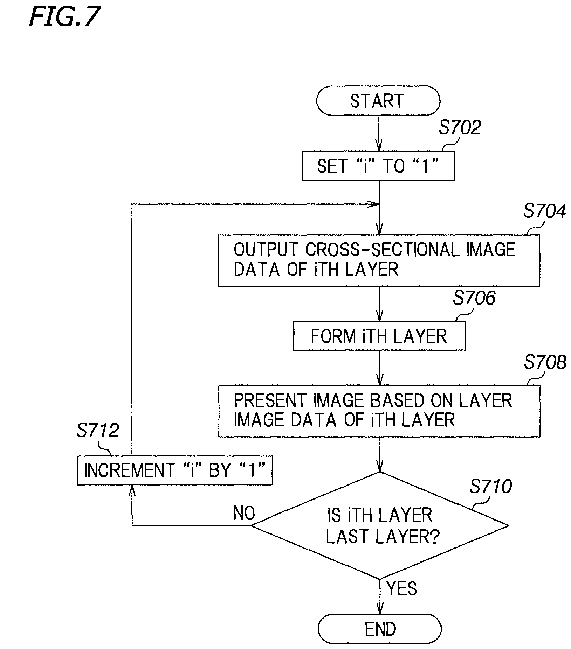

Next, how a three-dimensional object is formed will be described with reference to the flow chart of FIG. 7.

First, in Step S702, the controller 52 sets "i", representing the layer symbol of cross-sectional image data, to "1".

In Step S704, the controller 52 outputs, to the memory 60, information indicating that the layer symbol "i" has been set to "1". Then, the cross-sectional image data of the ith layer stored in the memory 60 is output to the controller 52.

In Step S706, photo-curable resin is discharged in accordance with the cross-sectional image data of the ith layer, and the photo-curable resin is cured, thus forming the ith layer. More specifically, in Step S706, the controller 52 controls the movements of the table 16, the movable member 24, and the discharge head 14 so as to form the ith layer of a three-dimensional object in accordance with the cross-sectional image data of the ith layer output to the controller 52 in Step S704. In Step S706, the controller 52 causes the discharge head 14 to discharge photo-curable resin onto the table 16, while moving the table 16 along the Y axis, moving the movable member 24 along the X axis, and moving the discharge head 14 along the Z axis.

In Step S708, the display 78 presents an image based on the layer image data of the ith layer. More specifically, in Step S708, upon formation of the ith layer, the controller 52 outputs, to the layer image data output 76, information indicating that the ith layer has been formed. In response to this information, the layer image data output 76 outputs, to the display controller 58, the layer image data of the ith layer stored in the memory 60. Thus, the layer image of the ith layer is presented on the display 78. Examples of the image based on the layer image data of the ith layer include a printing image obtained when i pieces of layer image data (i.e., the layer image data of the first to ith layers) are stacked in the order in which the layers are formed.

When the image based on the layer image data of the ith layer has been presented on the display 78, the controller 52 determines, in Step S710, whether the ith layer is the last layer. In other words, in Step S710, the controller 52 determines whether the ith layer is the last layer when the ith layer has been formed. Upon determination in Step S710 that the ith layer is not the last layer, the process proceeds to Step S712. In contrast, upon determination in Step S710 that the ith layer is the last layer, the three-dimensional printing apparatus 10 finishes forming the three-dimensional object.

In Step S712, the value of "i" is incremented by "1". More specifically, in Step S712, the value of "i" is set so that cross-sectional image data of a next layer (i.e., a layer subsequent to the layer whose image, based on the corresponding layer image data, has been presented on the display 78 in Step S708) is output to the controller 52 in Step S704.

The three-dimensional printing apparatus 10 generates the three-dimensional data of the support model SM in accordance with the three-dimensional data of the target model TM, thus generating the three-dimensional data of the full model FM including the support model SM. When the three-dimensional data of the full model FM is edited, one of the target and support models TM and SM, which is not the editing target, is presented in a semi-transparent manner. Thus, the worker is able to clearly identify the editing target when editing the target model TM or the support model SM. This makes it possible to improve workability when the worker edits the target model TM or the support model SM, and to prevent an editing error induced by misidentification of the editing target.

Once the three-dimensional printing apparatus 10 starts forming a three-dimensional object based on cross-sectional image data, the layer image data output 76 outputs, each time a layer is actually formed, layer image data of the formed layer to the display controller 58, so that the display 78 presents an image based on the layer image data. Thus, the worker checks the image presented on the display 78 so as to surely determine the progress of formation of the three-dimensional object. This prevents the worker from performing an inadvertent, improper operation (such as power shutdown or opening of the cover, for example) while the three-dimensional printing apparatus 10 forms the three-dimensional object. As used herein, the term "progress of formation" refers to, for example, information indicating how far a three-dimensional object, which the worker is trying to form, has been formed, and includes information indicating how far the three-dimensional object has been formed at some point in time.

The above preferred embodiment of the present invention may include the following variations.

### Variation 1

In the above preferred embodiment, the movable member 24 preferably is configured to move along the X axis, the table 16 is arranged to move along the Y axis, and the discharge head 14 is arranged to move along the Z axis. However, the movable member 24, the table 16, and the discharge head 14 are not limited to these configurations and arrangements. The movable member 24, the table 16, and the discharge head 14 may be configured in any other manner that enables the relative positions of the table 16 and the discharge head 14 to change three-dimensionally. For example, any one of the movable member 24, the table 16, and the discharge head 14 may be immovable.

### Variation 2

In the above preferred embodiment, three-dimensional data of the target model TM preferably is entered into the microcomputer 50 to generate three-dimensional data of the full model FM including the support model SM, cross-sectional image data, and layer image data. However, three-dimensional data of the full model FM, cross-sectional image data, and layer image data do not necessarily have to be generated by the microcomputer 50. For example, a personal computer prepared separately from the three-dimensional printing apparatus 10 may generate three-dimensional data of the full model FM including the support model SM, cross-sectional image data, and layer image data. In that case, the three-dimensional data, cross-sectional image data, and layer image data, which have been generated, may be supplied to the microcomputer 50 via a wired or wireless communication line or a non-transitory computer-readable recording medium.

### Variation 3

In the above preferred embodiment, the discharge head 14 preferably discharges photo-curable resin onto the upper surface 16A of the table 16 so as to form a three-dimensional object. However, a three-dimensional object may be formed in any other manner. For example, a projector may apply light to a predetermined image through the bottom surface of a container storing liquid photo-curable resin, so that the photo-curable resin is cured to form resin layers under the lower surface of a holder disposed inside the container, and the resin layers are stacked to form a three-dimensional object. The three-dimensional printing apparatus may have any arrangement as long as a three-dimensional object is formed by stacking layers having shapes based on cross-sectional image data.

### Variation 4

In the above preferred embodiment, all of the cross-sectional image data preferably is generated, and then layer image data preferably is generated in accordance with the corresponding cross-sectional image data. However, layer image data may be generated in any other manner. For example, each time cross-sectional image data of a layer is generated, corresponding layer image data may be generated. In other words, cross-sectional image data and layer image data may be generated for each layer.

### Variation 5

Before the three-dimensional printing apparatus 10 starts forming a three-dimensional object, the display 78 may present a printing image in such a manner that layers are presented on a one-by-one basis (in which case the display 78 presents an image based on layer image data of a layer specified), or a plurality of continuous layers are stacked in sequence (in which case the display 78 presents an image based on layer image data of a plurality of continuous layers specified) . Alternatively, the display 78 may present a printing image in one of the following selectable modes: a mode in which layers are presented on a one-by-one basis; a mode in which a plurality of continuous layers are presented; and a mode in which all layers are presented. In that case, the image presented on the display 78 changes in accordance with the selected mode.

Thus, the worker is able to efficiently determine if there is a defect in layer image data caused by, for example, what is called "data missing" in which a cross section of a three-dimensional object represented by cross-sectional image data has a missing portion. For example, the worker is able to identify where a defect, caused by "data missing" , for example, is occurring by magnifying defective cross-sectional image data, and to edit the cross-sectional image data so as to correct the defect in the cross-sectional image data before the three-dimensional printing apparatus 10 starts printing a three-dimensional object.

The worker edits cross-sectional image data while looking at an image that is based on the cross-sectional image data and presented on the display 78. In view of this, an image based on cross-sectional image data is preferably presented on the display 78 so that the model, which is not designated as the editing target by the worker, is presented in a semi-transparent manner. In that case, the worker is allowed to concentrate on the editing target, thus enhancing the efficiency of editing work.

### Variation 6

In the above preferred embodiment, the display controller 58 preferably causes the display 78 to present one of the target and support models TM and SM, which is not designated as the editing target by the worker, in a semi-transparent manner. However, the target and support models TM and SM may be presented in any other suitable manner. In other words, one of the models, which is not the editing target, and the other model, which is the editing target, may be presented in any other manner that enables the worker to visually and clearly distinguish these models from each other. In one example, one of the models, which is not the editing target, and the other model, which is the editing target, may be presented in different colors. In another example, one of the models, which is not the editing target, may be presented using only a line or lines defining an outer shape of the model.

### Variation 7

In the above preferred embodiment, an image based on layer image data preferably is presented on the display 78 so that the worker is able to check on the progress of formation of a three-dimensional object. However, any other image may be presented on the display 78 so that the worker is able to check on the progress of formation of a three-dimensional object. For example, the display 78 may present an image obtained from three-dimensional data of the target model TM in accordance with cross-sectional image data so that the worker is able to check on the current progress of formation of a three-dimensional object or the progress of formation of a layer of the three-dimensional object being formed. Examples of the image presented in advance on the display 78 includes an image based on layer image data of a layer being printed at present, i.e., an image based on cross-sectional image data at the uppermost surface of a three-dimensional object being printed. The image presented on the display 78 in this case includes neither the support model SM nor a shape of a lateral surface of the target model TM represented by an image based on layer image data (i.e., a step shape that is defined along the lateral surface of the target model TM and indicates size differences of layers).

Alternatively, the display 78 may present an image obtained from three-dimensional data of the full model FM in accordance with cross-sectional image data generated from the three-dimensional data of the full model FM, including the support model SM, so that the worker is able to check on the progress of formation of a three-dimensional object. In that case, the image presented on the display 78 includes the support model SM.

When presenting an image based on cross-sectional image data, the display 78 presents an image based on cross-sectional image data having a layer symbol associated with a layer that has been formed (i.e., cross-sectional image data generated from three-dimensional data of the full model FM).

### Variation 8

In the above preferred embodiment, the display 78 preferably simply presents an image based on layer image data of layer(s) formed. Alternatively, the display 78 may present an image, which is based on layer image data of layer(s) formed, in any other manner. For example, the display 78 may present a printing image in a semi-transparent manner, and at some point during printing, an image, which is based on layer image data of layer (s) formed by then, may be superimposed on the printing image.

More specifically, upon start of formation of a three-dimensional object, the layer image data output 76 may output all layer image data to the display controller 58, and the display 78 may present a printing image in a semi-transparent manner. Subsequently, each time a layer is formed, the layer image data output 76 may output, to the display controller 58, layer image data of the newly formed layer, and the display 78 may present the printing image such that an image, based on the layer image data that has already been output to the display controller 58, is superimposed on the printing image. In the above preferred embodiment, prior to the start of formation of a three-dimensional object, the layer image data output 76 preferably outputs all layer image data to the display controller 58, and the display 78 presents a printing image. In this case, upon start of formation of a three-dimensional object, the display controller 58 changes the mode of presenting the printing image on the display 78.

Alternatively, the display 78 may present, instead of a printing image, an image, which is based on three-dimensional data of the full model FM including the support model SM, in a semi-transparent manner, and may superimpose, on this image, an image based on layer image data of layer(s) formed.

More specifically, upon start of formation of a three-dimensional object, the controller 52 may output three-dimensional data of the full model FM to the display controller 58, and the display 78 may present an image, which is based on the three-dimensional data of the full model FM, in a semi-transparent manner. Subsequently, each time a layer is formed, the layer image data output 76 may output layer image data of the newly formed layer to the display controller 58, and the display 78 may superimpose, on the image based on the three-dimensional data of the full model FM, an image based on the layer image data that has already been output to the display controller 58. Thus, when checking the image presented on the display 78, the worker is able to easily determine how far the three-dimensional object has been formed.

Note that a printing image presented on the display 78 or an image based on three-dimensional data of the full model FM does not necessarily have to be presented in a semi-transparent manner. Alternatively, theses images may be presented in any other manner as long as these images are presented in a different mode from a present mode of an image based on layer image data of layer (s) formed. For example, a printing image presented on the display 78 or an image based on three-dimensional data of the full model FM may be presented in a color different from that in which an image based on layer image data is presented, or may be presented using only a line or lines defining an outer shape.

### Variation 9

Any combination of the above preferred embodiment and Variations 1 to 8 may be used as appropriate.

The above preferred embodiment and Variations 1 to 9 of the present invention provide a three-dimensional printing apparatus suitable for use in forming a three-dimensional object. The scope of the present invention is to be determined solely by the following claims.

## Claims

1. A three-dimensional printing apparatus (10) that receives or generates three-dimensional data representing a shape of a three-dimensional object to be formed, and generates cross-sectional image data from the three-dimensional data so as to form the three-dimensional object in accordance with the generated cross-sectional image data, the cross-sectional image data representing cross sections obtained by dividing the three-dimensional object, which is to be formed, into a plurality of layers continuous in a predetermined direction, the apparatus comprising:
a display (78) configured or programmed to present images;
a layer image data generator (56) configured or programmed to add thickness information, which is a predetermined interval corresponding to a layer pitch at which the three-dimensional object is to be actually formed, to the cross-sectional image data of each of the layers, thus generating layer image data three-dimensionally representing each of the layers to be actually formed on a one-by-one basis;
a layer image data output (76) configured or programmed to output the layer image data generated by the layer image data generator (56); and
a display controller (58) configured or programmed to cause the display (78) to present a first image upon actual formation of a predetermined layer of the three-dimensional object in accordance with the cross-sectional image data of the predetermined layer, the first image being based on the layer image data of the predetermined layer to be actually formed on a one-by-one basis, which is output from the layer image data output.

2. The three-dimensional printing apparatus (10) according to Claim 1, wherein the layer image data generator is configured or programmed to include:
an acquirer (62) configured or programmed to acquire first two-dimensional coordinate data from the cross-sectional image data of each of the layers;
a converter (64) configured or programmed to convert, using triangulation, the first two-dimensional coordinate data into second two-dimensional coordinate data including triangles;
a first generator configured or programmed to add height information to the second two-dimensional coordinate data, thus generating three-dimensional coordinate data; and
a second generator configured or programmed to add thickness information to the three-dimensional coordinate data, thus generating the layer image data three-dimensionally representing each of the layers.

3. The three-dimensional printing apparatus (10) according to Claim 1 or 2, wherein the layer image data output (76) is configured or programmed to output all the layer image data, generated by the layer image data generator (56), to the display controller (58) before the three-dimensional printing apparatus (10) starts printing the three-dimensional object.

4. The three-dimensional printing apparatus (10) according to Claim 3, wherein
the display controller (58) is configured or programmed to cause the display (78) to present a second image before the three-dimensional printing apparatus (10) starts printing the three-dimensional object, the second image three-dimensionally representing the three-dimensional object in finished form in accordance with all the layer image data output from the layer image data output (76); and
the display controller (58) is configured or programmed to cause the display (78) to present, upon actual formation of the predetermined layer, the first image in a different mode from a present mode of the second image.

5. The three-dimensional printing apparatus (10) according to Claim 3, further comprising a three-dimensional data output interface (84) configured or programmed to output the three-dimensional data to the display controller (58); wherein
the display controller (58) is configured or programmed to cause the display (78) to present a third image three-dimensionally representing the three-dimensional object in accordance with the three-dimensional data output from the three-dimensional data output interface (84); and
the display controller (58) is configured or programmed to cause the display (78) to present, upon actual formation of the predetermined layer, the first image in a different mode from a present mode of the third image.

6. The three-dimensional printing apparatus (10) according to Claim 1 or 2, wherein the layer image data output (76) is configured or programmed to output the layer image data of the predetermined layer, generated by the layer image data generator (56), to the display controller (58) upon actual formation of the predetermined layer:

7. The three-dimensional printing apparatus (10) according to Claim 1, wherein the display controller (58) is configured or programmed to cause the display (78) selectively to present layers on a one-by-one basis, to present a plurality of continuous layers, or to present all layers before the three-dimensional printing apparatus (10) starts printing the three-dimensional object.

8. A three-dimensional printing method for forming a three-dimensional object, the method comprising:
(a) preparing a display (78) configured or programmed to present images;
(b) preparing or generating three-dimensional data representing a shape of a three-dimensional object to be formed;
(c) generating cross-sectional image data from the three-dimensional data, the cross-sectional image data representing cross sections obtained by dividing the three-dimensional object, which is to be formed, into a plurality of layers continuous in a predetermined direction;
(d) adding thickness information, which is a predetermined interval corresponding to a layer pitch at which the three-dimensional object is to be actually formed, to the cross-sectional image data of each of the layers, thus generating layer image data three-dimensionally representing each of the layers to be actually formed on a one-by-one basis;
(e) outputting the layer image data generated in the step (d);
(f) causing the display (78) to present a first image upon actual formation of a predetermined layer of the three-dimensional object in accordance with the cross-sectional image data of the predetermined layer, the first image being based on the layer image data of the predetermined layer to be actually formed on a one-by-one basis, which is output in the step (e); and
(g) forming the three-dimensional object in accordance with the generated cross-sectional image data.

9. The three-dimensional printing method according to Claim 8, wherein the step (d) includes:
(d1) acquiring first two-dimensional coordinate data from the cross-sectional image data of each of the layers;
(d2) converting, using triangulation, the first two-dimensional coordinate data into second two-dimensional coordinate data including triangles;
(d3) adding height information to the second two-dimensional coordinate data, thus generating three-dimensional coordinate data; and
(d4) adding thickness information to the three-dimensional coordinate data, thus generating the layer image data three-dimensionally representing each of the layers.

10. The three-dimensional printing method according to Claim 8 or 9, wherein the step (e) includes:
(e1) outputting, before printing of the three-dimensional object starts, all the layer image data generated in the step (d).

11. The three-dimensional printing method according to Claim 10, wherein the step (f) includes:
(f1) causing the display (78) to present a second image before the printing of the three-dimensional object starts, the second image three-dimensionally representing the three-dimensional object in finished form in accordance with all the layer image data output in the step (e); and
(f2) causing the display (78) to present, upon actual formation of the predetermined layer, the first image in a different mode from a present mode of the second image.

12. The three-dimensional printing method according to Claim 10, further comprising (h) outputting the three-dimensional data representing the shape of the three-dimensional object to be formed, wherein the step (f) includes:
(f4) causing the display (78) to present a third image three-dimensionally representing the three-dimensional object in accordance with the three-dimensional data output in the step (h); and
(f5) causing the display (78) to present, upon actual formation of the predetermined layer, the first image in a different mode from a present mode of the third image.

13. The three-dimensional printing method according to Claim 8 or 9, wherein the step (e) includes (e2) outputting, upon actual formation of the predetermined layer, the layer image data of the predetermined layer generated in the step (d).

## Patentansprüche

1. Vorrichtung zum dreidimensionalen Drucken (10), die dreidimensionale Daten empfängt oder generiert, die eine Form eines zu bildenden dreidimensionalen Objekts darstellen, und Querschnittbilddaten aus den dreidimensionalen Daten generiert, um das dreidimensionale Objekt gemäß den generierten Querschnittbilddaten zu bilden, wobei die Querschnittbilddaten Querschnitte darstellen, die durch das Zerteilen des zu bildenden dreidimensionalen Objekts in eine Mehrzahl von Schichten erzeugt werden, die in einer vorgegebenen Richtung fortlaufend sind, die Vorrichtung umfassend:
ein Display (78), das konfiguriert oder programmiert ist, Bilder darzustellen;
einen Schichtbilddatengenerator (56), der konfiguriert oder programmiert ist, eine Information über die Dicke den Querschnittbilddaten von jeder der Schichten hinzuzufügen, die ein vorgegebenes Intervall ist, das einem Schichtenabstand entspricht, an dem das dreidimensionale Objekt tatsächlich geformt werden muss, damit Schichtbilddaten generiert werden, die jede der Schichten dreidimensional darstellen, die tatsächlich Stück für Stück zu bilden sind;
einen Schichtbilddatenoutput (76), der konfiguriert oder programmiert ist, die durch den Schichtbilddatengenerator (56) generierten Schichtbilddaten auszugeben; und
eine Displaysteuerung (58), die konfiguriert oder programmiert ist, das Display (78) zu veranlassen, ein erstes Bild auf tatsächlicher Bildung einer vorgegebenen Schicht des dreidimensionalen Objekts gemäß den Querschnittbilddaten der vorgegebenen Schicht darzustellen, wobei das erste Bild auf den aus dem Schichtbilddatenoutput ausgegebenen Schichtbilddaten der vorgegebenen Schicht basiert, die tatsächlich Stück für Stück zu bilden ist.

2. Vorrichtung zum dreidimensionalen Drucken (10) nach Anspruch 1, wobei der Schichtbilddatengenerator konfiguriert oder programmiert ist, das Folgende zu umfassen:
eine Erfassungseinrichtung (62), die konfiguriert oder programmiert ist, erste zweidimensionale Koordinatendaten aus den Querschnittbilddaten von jeder der Schichten zu erfassen;
einen Umsetzer (64), der konfiguriert oder programmiert ist, unter Verwendung von Triangulation die ersten zweidimensionalen Koordinatendaten in zweite zweidimensionale Koordinatendaten einschließlich Dreiecken umzusetzen;
einen ersten Generator, der konfiguriert oder programmiert ist, eine Information über die Höhe den zweiten zweidimensionalen Koordinatendaten hinzuzufügen, damit dreidimensionale Koordinatendaten erstellt werden; und
einen zweiten Generator, der konfiguriert oder programmiert ist, eine Information über die Dicke den dreidimensionalen Koordinatendaten hinzuzufügen, damit die Schichtbilddaten, die jede der Schichten repräsentieren, erstellt werden.

3. Vorrichtung zum dreidimensionalen Drucken (10) nach Anspruch 1 oder 2, wobei der Schichtbilddatenoutput (76) konfiguriert oder programmiert ist, alle Schichtbilddaten, die durch den Schichtbilddatengenerator (56) erzeugt werden, an die Displaysteuerung (58) auszugeben, bevor die Vorrichtung zum dreidimensionalen Drucken (10) mit dem Drucken des dreidimensionalen Objekts anfängt.

4. Vorrichtung zum dreidimensionalen Drucken (10) nach Anspruch 3, wobei
die Displaysteuerung (58) konfiguriert oder programmiert ist, das Display (78) zu veranlassen, ein zweites Bild darzustellen, bevor die Vorrichtung zum dreidimensionalen Drucken (10) anfängt, das dreidimensionale Objekt zu drucken, wobei das zweite Bild das dreidimensionale Objekt in fertiger Form gemäß dem Schichtbilddatenoutput aus dem Schichtbilddatenoutput (76) dreidimensional darstellt; und
die Displaysteuerung (58) konfiguriert oder programmiert ist, das Display (78) zu veranlassen, nach tatsächlicher Bildung der vorgegebenen Schicht, das erste Bild in einem anderen Modus als einem Darstellungsmodus des zweiten Bildes darzustellen.

5. Vorrichtung zum dreidimensionalen Drucken (10) nach Anspruch 3, weiterhin umfassend ein dreidimensionales Datenoutputinterface (84), das konfiguriert oder programmiert ist, die dreidimensionalen Daten an die Displaysteuerung (58) auszugeben; wobei
die Displaysteuerung (58) konfiguriert und programmiert ist, das Display (78) zu veranlassen, ein drittes Bild darzustellen, das das dreidimensionale Objekt gemäß den dreidimensionalen Daten darstellt, die aus dem dreidimensionalen Datenoutputinterface (84) ausgegeben werden; und
die Displaysteuerung (58) konfiguriert oder programmiert ist, das Display (78) zu veranlassen, auf tatsächlicher Bildung der vorgegebenen Schicht, das erste Bild in einem anderen Modus als einem Darstellungsmodus des dritten Bildes darzustellen.

6. Vorrichtung zum dreidimensionalen Drucken (10) nach Anspruch 1 oder 2, wobei der Schichtbilddatenoutput (76) konfiguriert oder programmiert ist, die Schichtbilddaten der vorgegebenen Schicht an der Displaysteuerung (58) auf tatsächlicher Bildung der vorgegebenen Schicht auszugeben, die durch den Schichtbilddatengenerator (56) erzeugt werden.

7. Vorrichtung zum dreidimensionalen Drucken (10) nach Anspruch 1, wobei
die Displaysteuerung (58) konfiguriert oder programmiert ist, das Display (78) zu veranlassen, selektiv Schichten nacheinander darzustellen, eine Vielzahl von fortlaufenden Schichten darzustellen, oder alle Schichten darzustellen, bevor die Vorrichtung zum dreidimensionalen Drucken (10) mit dem Drücken des dreidimensionalen Objekts anfängt.

8. Verfahren zum dreidimensionalen Drucken für das Bilden eines dreidimensionalen Objekts, das Verfahren umfassend:
a. das Vorbereiten eines Displays (78), das konfiguriert oder programmiert ist, Bilder darzustellen:
b. das Vorbereiten oder das Generieren von dreidimensionalen Daten, die eine Form eines zu bildenden dreidimensionalen Objekts darstellen;
c. das Generieren von Querschnittbilddaten aus den dreidimensionalen Daten, wobei die Querschnittbilddaten Querschnitte darstellen, die durch das Zerteilen des zu bildenden dreidimensionalen Objekts in eine Mehrzahl von Schichten erzeugt werden, die in einer vorgegebenen Richtung fortlaufend sind;
d. das Hinzufügen einer Information über die Dicke zu den Querschnittbilddaten von jeder der Schichten, die ein vorgegebenes Intervall ist, das einem Schichtenabstand entspricht, an dem das dreidimensionale Objekt tatsächlich geformt werden muss, damit Schichtbilddaten generiert werden, die jede der Schichten dreidimensional darstellen, die tatsächlich Stück für Stück zu bilden sind;
e. das Ausgeben der Schichtbilddaten, die in dem Schritt (d) generiert wurden; und
f. das Veranlassen des Displays (78), ein erstes Bild nach tatsächlicher Bildung einer vorgegebenen Schicht des dreidimensionalen Objekts gemäß den Querschnittbilddaten der vorgegebenen Schicht darzustellen, wobei das erste Bild auf den in dem Schritt (e) ausgegebenen Schichtbilddaten der vorgegebenen Schicht basiert, die tatsächlich Stück für Stück zu bilden ist; und
g. das Bilden des dreidimensionalen Objekts gemäß den generierten Querschnittbilddaten.

9. Verfahren zum dreidimensionalen Drucken nach Anspruch 8, wobei der Schritt (d) umfasst:
d1. das Erfassen von zweidimensionalen Koordinatendaten aus den Querschnittbilddaten von jeder der Schichten;
d2. das Umsetzen der ersten zweidimensionalen Koordinatendaten in zweite zweidimensionale Koordinatendaten einschließlich Dreiecken unter Verwendung von Triangulation;
d3. das Hinzufügen einer Information über die Höhe zu den zweiten zweidimensionalen Koordinatendaten, damit dreidimensionale Koordinatendaten erstellt werden;
d4. das Hinzufügen einer Information über die Dicke zu den dreidimensionalen Koordinatendaten, damit die Schichtbilddaten, die jede der Schichten repräsentieren, erstellt werden.

10. Verfahren zum dreidimensionalen Drucken nach Anspruch 8 oder 9, wobei der Schritt (e) umfasst:
e1. das Ausgeben aller Schichtbilddaten, die in dem Schritt (d) erzeugt werden, bevor das Drucken des dreidimensionalen Objekts anfängt.

11. Verfahren zum dreidimensionalen Drucken nach Anspruch 10, wobei der Schritt (f) umfasst:
f1. das Veranlassen des Displays (78), vor dem Drucken des dreidimensionalen Objekts ein zweites Bild darzustellen, wobei das zweite Bild das dreidimensionale Objekt in fertiger Form gemäß dem Schichtbilddatenoutput des Schritts (e) dreidimensional darstellt; und
f2. das Veranlassen des Displays (78), das erste Bild in einem anderen Modus als einem Darstellungsmodus des zweiten Bildes darzustellen, nach tatsächlicher Bildung der vorgegebenen Schicht.

12. Verfahren zum dreidimensionalen Drucken nach Anspruch 10, weiterhin umfassend:
h. das Ausgeben der dreidimensionalen Daten, die die Form des zu bildenden dreidimensionalen Objekts darstellen,
wobei der Schritt (f) umfasst:
f4. das Veranlassen des Displays (78), ein drittes Bild darzustellen, das das dreidimensionale Objekt gemäß den dreidimensionalen Daten darstellt, die in dem Schritt (h) ausgegeben werden; und
f5. das Veranlassen des Displays (78), nach tatsächlicher Bildung der vorgegebenen Schicht, das erste Bild in einem anderen Modus als einem Darstellungsmodus des dritten Bildes darzustellen;

13. Verfahren zum dreidimensionalen Drucken nach Anspruch 8 oder 9, wobei der Schritt (e) umfasst:
e2. das Ausgeben, nach tatsächlicher Bildung der vorgegebenen Schicht, der Schichtbilddaten der vorgegebenen Schicht, die in dem Schritt (d) erzeugt werden.

## Revendications

1. Appareil d'impression tridimensionnelle (10) qui reçoit ou génère des données tridimensionnelles représentant une forme d'un objet tridimensionnel à former, et génère des données d'image en coupe transversale à partir des données tridimensionnelles afin de former l'objet tridimensionnel conformément aux données d'image en coupe transversale générées, les données d'image en coupe transversale représentant des coupes transversales obtenues en divisant l'objet tridimensionnel, qui est à former, en une pluralité de couches continues dans une direction prédéterminée, l'appareil comprenant :
un affichage (78) configuré ou programmé pour présenter des images ;
un générateur de données d'image de couche (56) configuré ou programmé pour ajouter des informations d'épaisseur, qui sont un intervalle prédéterminé correspondant à un pas de couches auquel l'objet tridimensionnel doit être réellement formé, aux données d'image en coupe transversale de chacune des couches, générant ainsi des données d'image de couche représentant de manière tridimensionnelle chacune des couches devant être réellement formées sur une base une par une ;
une sortie de données d'image de couche (76) configurée ou programmée pour délivrer en sortie les données d'image de couche générées par le générateur de données d'image de couche (56) ; et
un dispositif de commande d'affichage (58) configuré ou programmé pour amener l'affichage (78) à présenter une première image lors d'une formation réelle d'une couche prédéterminée de l'objet tridimensionnel conformément aux données d'image en coupe transversale de la couche prédéterminée, la première image étant basée sur les données d'image de couche de la couche prédéterminée devant être réellement formée sur une base une par une, qui sont délivrées en sortie par la sortie de données d'image de couche.

2. Appareil d'impression tridimensionnelle (10) selon la revendication 1, dans lequel le générateur de données d'image de couche est configuré ou programmé pour inclure :
un acquéreur (62) configuré ou programmé pour acquérir des premières données de coordonnées bidimensionnelles à partir des données d'image en coupe transversale de chacune des couches ;
un convertisseur (64) configuré ou programmé pour convertir, en utilisant une triangulation, les premières données de coordonnées bidimensionnelles en secondes données de coordonnées bidimensionnelles comprenant des triangles ;
un premier générateur configuré ou programmé pour ajouter des informations de hauteur aux secondes données de coordonnées bidimensionnelles, générant ainsi des données de coordonnées tridimensionnelles ; et
un second générateur configuré ou programmé pour ajouter des informations d'épaisseur aux données de coordonnées tridimensionnelles, générant ainsi les données d'image de couche représentant de manière tridimensionnelle chacune des couches.

3. Appareil d'impression tridimensionnelle (10) selon la revendication 1 ou 2, dans lequel la sortie de données d'image de couche (76) est configurée ou programmée pour délivrer en sortie toutes les données d'image de couche, générées par le générateur de données d'image de couche (56), au dispositif de commande d'affichage (58) avant que l'appareil d'impression tridimensionnelle (10) ne commence à imprimer l'objet tridimensionnel.

4. Appareil d'impression tridimensionnelle (10) selon la revendication 3, dans lequel le dispositif de commande d'affichage (58) est configuré ou programmé pour amener l'affichage (78) à présenter une deuxième image avant que l'appareil d'impression tridimensionnelle (10) ne commence à imprimer l'objet tridimensionnel, la deuxième image représentant de manière tridimensionnelle l'objet tridimensionnel sous une forme finie conformément à toutes les données d'image de couche délivrées en sortie par la sortie de données d'image de couche (76) ; et
le dispositif de commande d'affichage (58) est configuré ou programmé pour amener l'affichage (78) à présenter, lors d'une formation réelle de la couche prédéterminée, la première image dans un mode différent d'un présent mode de la deuxième image.

5. Appareil d'impression tridimensionnelle (10) selon la revendication 3, comprenant en outre une interface de sortie de données tridimensionnelles (84) configurée ou programmée pour délivrer en sortie les données tridimensionnelles au dispositif de commande d'affichage (58) ; dans lequel
le dispositif de commande d'affichage (58) est configuré ou programmé pour amener l'affichage (78) à présenter une troisième image représentant de manière tridimensionnelle l'objet tridimensionnel conformément aux données tridimensionnelles délivrées en sortie par l'interface de sortie de données tridimensionnelles (84) ; et
le dispositif de commande d'affichage (58) est configuré ou programmé pour amener l'affichage (78) à présenter, lors d'une formation réelle de la couche prédéterminée, la première image dans un mode différent d'un présent mode de la troisième image.

6. Appareil d'impression tridimensionnelle (10) selon la revendication 1 ou 2, dans lequel la sortie de données d'image de couche (76) est configurée ou programmée pour délivrer en sortie les données d'image de couche de la couche prédéterminée, générées par le générateur de données d'image de couche (56), au dispositif de commande d'affichage (58) lors d'une formation réelle de la couche prédéterminée.

7. Appareil d'impression tridimensionnelle (10) selon la revendication 1, dans lequel le dispositif de commande d'affichage (58) est configuré ou programmé pour amener l'affichage (78) à présenter de manière sélective des couches sur une base une par une, pour présenter une pluralité de couches continues, ou pour présenter toutes les couches avant que l'appareil d'impression tridimensionnelle (10) ne commence à imprimer l'objet tridimensionnel.

8. Procédé d'impression tridimensionnelle pour former un objet tridimensionnel, le procédé comprenant les étapes consistant à :
(a) préparer un affichage (78) configuré ou programmé pour présenter des images ;
(b) préparer ou générer des données tridimensionnelles représentant une forme d'un objet tridimensionnel à former ;
(c) générer des données d'image en coupe transversale à partir des données tridimensionnelles, les données d'image en coupe transversale représentant des coupes transversales obtenues en divisant l'objet tridimensionnel, qui est à former, en une pluralité de couches continues dans une direction prédéterminée ;
(d) ajouter des informations d'épaisseur, qui sont un intervalle prédéterminé correspondant à un pas de couches auquel l'objet tridimensionnel doit être réellement formé, aux données d'image en coupe transversale de chacune des couches, générant ainsi des données d'image de couche représentant de manière tridimensionnelle chacune des couches devant être réellement formées sur une base une par une ;
(e) délivrer en sortie les données d'image de couche générées à l'étape (d) ;
(f) amener l'affichage (78) à présenter une première image lors d'une formation réelle d'une couche prédéterminée de l'objet tridimensionnel conformément aux données d'image en coupe transversale de la couche prédéterminée, la première image étant basée sur les données d'image de couche de la couche prédéterminée devant être réellement formée sur une base une par une, qui sont délivrées en sortie à l'étape (e) ; et
(g) former l'objet tridimensionnel conformément aux données d'image en coupe transversale générées.

9. Procédé d'impression tridimensionnelle selon la revendication 8, dans lequel l'étape (d) comprend les étapes consistant à :
(d1) acquérir des premières données de coordonnées bidimensionnelles à partir des données d'image en coupe transversale de chacune des couches ;
(d2) convertir, en utilisant une triangulation, les premières données de coordonnées bidimensionnelles en des secondes données de coordonnées bidimensionnelles comprenant des triangles ;
(d3) ajouter des informations de hauteur aux secondes données de coordonnées bidimensionnelles, générant ainsi des données de coordonnées tridimensionnelles ; et
(d4) ajouter des informations d'épaisseur aux données de coordonnées tridimensionnelles, générant ainsi les données d'image de couche représentant de manière tridimensionnelle chacune des couches.

10. Procédé d'impression tridimensionnelle selon la revendication 8 ou 9, dans lequel l'étape (e) consiste à :
(e1) délivrer en sortie, avant que l'impression de l'objet tridimensionnel ne commence, toutes les données d'image de couche générées à l'étape (d).

11. Procédé d'impression tridimensionnelle selon la revendication 10, dans lequel l'étape (f) consiste à :
(f1) amener l'affichage (78) à présenter une deuxième image avant que l'impression de l'objet tridimensionnel ne commence, la deuxième image représentant de manière tridimensionnelle l'objet tridimensionnel sous une forme finie conformément à toutes les données d'image de couche délivrées en sortie lors de l'étape (e) ; et
(f2) amener l'affichage (78) à présenter, lors d'une formation réelle de la couche prédéterminée, la première image dans un mode différent d'un présent mode de la deuxième image.

12. Procédé d'impression tridimensionnelle selon la revendication 10, consistant en outre à (h) délivrer en sortie les données tridimensionnelles représentant la forme de l'objet tridimensionnel à former, dans lequel l'étape (f) consiste à :
(f4) amener l'affichage (78) à présenter une troisième image représentant de manière tridimensionnelle l'objet tridimensionnel conformément aux données tridimensionnelles délivrées en sortie lors de l'étape (h) ; et
(f5) amener l'affichage (78) à présenter, lors d'une formation réelle de la couche prédéterminée, la première image dans un mode différent d'un présent mode de la troisième image.

13. Procédé d'impression tridimensionnelle selon la revendication 8 ou 9, dans lequel l'étape (e) consiste (e2) à délivrer en sortie, lors d'une formation réelle de la couche prédéterminée, les données d'image de couche de la couche prédéterminée générées lors de l'étape (d).
